# EUROPEAN PATENT APPLICATION

(11) **EP 4 509 977 A1**
(43) Date of publication of application: **19.02.2025**
(21) Application number: 23845349.2
(22) Date of filing: 14.07.2023
(51) Int. Cl.: G06F 3/14

(54) **SCREEN MIRRORING METHOD AND DEVICE**

(30) Priority: 26.07.2022 CN 202210886320
(71) Applicant: Huawei Technologies Co., Ltd., Shenzhen, Guangdong 518129 (CN)
(72) Inventor: SONG, Tao, Shenzhen, Guangdong 518129 (CN); FAN, Zhenyin, Shenzhen, Guangdong 518129 (CN)
(74) Representative: MERH-IP Matias Erny Reichl Hoffmann Patentanwälte PartG mbB
(86) International application number: PCT/CN2023/107542
(87) International publication number: WO 2024/022137

(57) **Abstract**

A projection method and a device relate to the field of terminal technologies. A source end device starts a keyboard and mouse service while performing projection, and does not need to perform mode switching between an extended mode and a sharing mode. The source end device and a destination electronic device can directly detect whether a keyboard and mouse traversal event is triggered, to share a mouse and a keyboard. This can avoid screen flickering caused by mode switching. In addition, the destination end device displays projection content in a window. In the method, the source end device displays a first interface. The source end device sends the projection content to the destination end device, so that the destination end device displays the projection content in the projection window. The source end device receives first keyboard and mouse attribute information from the destination end device, and displays a first keyboard and mouse cursor identifier corresponding to the first keyboard and mouse attribute information. The source end device receives first keyboard and mouse operation information from the destination end device, performs a response operation in response to the first keyboard and mouse operation information, and updates and displays the first interface.

## Description

This application claims priority to Chinese Patent Application No. 202210886320.6, filed with the China National Intellectual Property Administration on July 26, 2022 and entitled "PROJECTION METHOD AND DEVICE", which is incorporated herein by reference in its entirety.

### TECHNICAL FIELD

This application relates to the field of terminal technologies, and in particular, to a projection method and a device.

### BACKGROUND

With development of terminal technologies, projection technologies are widely used. Projection is to project screen content on a source end device to a destination end device for display. Currently, a manner of projection between electronic devices includes an extended mode. In the extended mode, when the source end device displays a first interface and the source end device further needs to display a second interface, a display screen of the destination end device is used as an extended screen of the source end device, and the destination end device displays the second interface.

In a related technology, in a process in which the source end device performs projection in the extended mode, the source end device may switch the extended mode to a sharing mode, so that the source end device and the destination end device can share a mouse and a keyboard, and keyboard and mouse traversal between the source end device and the destination end device is implemented. However, when the source end device performs mode switching between the extended mode and the sharing mode, screen flickering may occur.

### SUMMARY

Embodiments of this application provide a projection method and a device. A source end device starts a keyboard and mouse service while performing projection, and does not need to perform mode switching between an extended mode and a sharing mode. The source end device and a destination electronic device can directly detect whether a keyboard and mouse traversal event is triggered, to share a mouse and a keyboard. This can avoid screen flickering caused by mode switching. In addition, the destination end device displays projection content in a window.

To achieve the foregoing objective, the following technical solutions are used in embodiments of this application.

According to a first aspect, a projection method is provided, applied to a source end device, and including: The source end device establishes a projection connection to a destination end device, and starts a projection function and a first keyboard and mouse service; the source end device displays a first interface; the source end device sends projection content to the destination end device, so that the destination end device displays the projection content in a projection window, where the projection content is content on a second interface, and the first interface is the same as or different from the second interface; the source end device receives first keyboard and mouse attribute information from the destination end device, and displays a first keyboard and mouse cursor identifier corresponding to the first keyboard and mouse attribute information, where the first keyboard and mouse attribute information is information that meets a first preset condition; and the source end device receives first keyboard and mouse operation information from the destination end device, performs a response operation in response to the first keyboard and mouse operation information, and updates and displays the first interface, where the first keyboard and mouse operation information is keyboard and mouse operation information corresponding to the first keyboard and mouse cursor identifier obtained by the destination end device.

In an implementation of the first aspect, that the source end device sends projection content to the destination end device includes: The source end device performs screen capturing on a second interface in response to a projection operation for the second interface, and performs image encoding on a projection interface obtained through capturing to obtain the projection content; and the source end device sends the projection content to the destination end device.

In an implementation of the first aspect, after the source end device sends the projection content to the destination end device, the method further includes: The source end device displays a second keyboard and mouse cursor identifier, and sends second keyboard and mouse attribute information corresponding to the second keyboard and mouse cursor identifier, where the second keyboard and mouse attribute information is information that meets a second preset condition; and when an identifier location of the second keyboard and mouse cursor identifier belongs to the projection window, the source end device obtains second keyboard and mouse operation information corresponding to the second keyboard and mouse cursor identifier, and performs a response operation in response to the second keyboard and mouse operation information to update content in the projection window; or when an identifier location of the second keyboard and mouse cursor identifier does not belong to the projection window, the source end device sends second keyboard and mouse operation information corresponding to the second keyboard and mouse cursor identifier to the destination end device, so that the destination end device performs a response operation in response to the second keyboard and mouse operation information to update content outside the projection window on a currently displayed interface.

In an implementation of the first aspect, the second preset condition includes: a cursor location in the second keyboard and mouse attribute information belongs to a screen boundary of the source end device, and a keyboard and mouse movement direction in the second keyboard and mouse attribute information is moving towards an outside of the screen boundary of the source end device.

In an implementation of the first aspect, the first preset condition includes: a cursor location in the first keyboard and mouse attribute information belongs to a screen boundary of the destination end device, and a keyboard and mouse movement direction in the first keyboard and mouse attribute information is moving towards an outside of the screen boundary of the destination end device.

In an implementation of the first aspect, the projection connection includes a device virtual channel; and that the source end device sends projection content to the destination end device includes: The source end device sends the projection content to the destination end device through the device virtual channel.

In an implementation of the first aspect, when there are a plurality of destination end devices, that the source end device establishes a projection connection to a destination end device includes: The source end device separately establishes a plurality of projection connections to the plurality of destination end devices, and allocates, based on each of the plurality of projection connections, a device virtual channel corresponding to each destination end device.

According to a second aspect, a projection method is provided, applied to a destination end device, and including: The destination end device starts a projection function and a second keyboard and mouse service when being connected to a projection connection; the destination end device receives projection content from a source end device, and creates a projection window; the destination end device displays the projection content in the projection window; the destination end device receives second keyboard and mouse attribute information from the source end device, and displays a second keyboard and mouse cursor identifier corresponding to the second keyboard and mouse attribute information, where the second keyboard and mouse attribute information is information that meets a second preset condition; and the destination end device updates and displays a currently displayed interface based on second keyboard and mouse operation information.

In an implementation of the second aspect, that the destination end device updates and displays a currently displayed interface based on second keyboard and mouse operation information includes: When an identifier location of the second keyboard and mouse cursor identifier belongs to the projection window, the destination end device sends the second keyboard and mouse operation information to the source end device, so that the source end device performs a response operation in response to the second keyboard and mouse operation information to update content in the projection window; or when an identifier location of the second keyboard and mouse cursor identifier does not belong to the projection window, the destination end device receives the second keyboard and mouse operation information from the source end device, and performs a response operation in response to the second keyboard and mouse operation information to update content outside the projection window in the currently displayed interface, where the second keyboard and mouse operation information is keyboard and mouse operation information corresponding to the second keyboard and mouse cursor identifier obtained from the source end device.

In an implementation of the second aspect, after the destination end device receives the projection content from the source end device, the method further includes: The destination end device decodes the projection content to obtain a projection interface. That the destination end device displays the projection content in the projection window includes: The destination end device displays the projection interface in the projection window based on a display area size of the second interface of the source end device and a display area size of the projection window.

In an implementation of the second aspect, after the destination end device displays the projection content in the projection window, the method further includes: The destination end device displays a first keyboard and mouse cursor identifier, and sends first keyboard and mouse attribute information corresponding to the first keyboard and mouse cursor identifier, where the first keyboard and mouse attribute information is information that meets a first preset condition; and the destination end device obtains first keyboard and mouse operation information corresponding to the first keyboard and mouse cursor identifier, and sends the first keyboard and mouse operation information to the source end device, so that the source end device receives the first keyboard and mouse operation information and performs a response operation in response to the first keyboard and mouse operation information to update and display a first interface.

In an implementation of the second aspect, the first preset condition includes: a cursor location in the first keyboard and mouse attribute information belongs to a screen boundary of the destination end device, and a keyboard and mouse movement direction in the first keyboard and mouse attribute information is moving towards an outside of the screen boundary of the destination end device.

In an implementation of the second aspect, the second preset condition includes: a cursor location in the second keyboard and mouse attribute information belongs to a screen boundary of the source end device, and a keyboard and mouse movement direction in the second keyboard and mouse attribute information is moving towards an outside of the screen boundary of the source end device.

In an implementation of the second aspect, the projection connection includes a device virtual channel; and that the destination end device receives projection content from a source end device includes: The destination end device receives the projection content from the source end device through the device virtual channel.

In an implementation of the second aspect, the projection window includes a first display area used to display the projection interface and a second display area used to display a window editing control, and a size of the projection window is less than or equal to a size of the destination end screen.

According to a third aspect, an electronic device is provided. The first device has a function of implementing the method according to the first aspect. The function may be implemented by hardware, or may be implemented by hardware executing corresponding software. The hardware or the software includes one or more modules corresponding to the function.

According to a fourth aspect, an electronic device is provided, including a processor and a memory. The memory is configured to store computer-executable instructions, and when the first device runs, the processor executes the computer-executable instructions stored in the memory, so that the first device performs the projection method according to any one of the implementations of the first aspect or the projection method according to any one of the implementations of the second aspect.

According to a fifth aspect, an electronic device is provided, including a processor. The processor is configured to: after being coupled to a memory and reading instructions in the memory, perform the projection method according to any one of the implementations of the first aspect or the projection method according to any one of the implementations of the second aspect according to the instructions.

According to a sixth aspect, a computer-readable storage medium is provided. The computer-readable storage medium stores instructions, and when the instructions are run on a computer, the computer is enabled to perform the projection method according to any one of the implementations of the first aspect or the projection method according to any one of the implementations of the second aspect.

According to a seventh aspect, a computer program product including instructions is provided. When the computer program product runs on a computer, the computer is enabled to perform the projection method according to any one of the implementations of the first aspect or the projection method according to any one of the implementations of the second aspect.

For technical effects of any design of the second aspect to the seventh aspect, refer to the technical effects of different designs of the first aspect, and details are not described herein again.

### BRIEF DESCRIPTION OF DRAWINGS

FIG. 1 is a diagram of a principle of a projection method according to a related technology;
FIG. 2(a) to FIG. 2(f) are diagrams of projection in an extended mode according to a related technology;
FIG. 3 is a diagram of a principle of a projection method according to an embodiment of this application;
FIG. 4 is a diagram of a hardware structure of an electronic device according to an embodiment of this application;
FIG. 5 is a diagram of a software structure of an electronic device 100 according to an embodiment of this application;
FIG. 6 is a flowchart of a projection method according to an embodiment of this application;
FIG. 7 is a diagram of a projection setting interface according to an embodiment of this application;
FIG. 8 is a diagram 1 of a projection window according to an embodiment of this application;
FIG. 9 is a diagram 2 of a projection window according to an embodiment of this application;
FIG. 10 is a flowchart of windowing projection according to an embodiment of this application;
FIG. 11 is a diagram 3 of a projection window according to an embodiment of this application;
FIG. 12(a) to FIG. 12(c) are diagrams of a projection scenario according to an embodiment of this application;
FIG. 13 is a flowchart of sharing a keyboard and mouse according to an embodiment of this application;

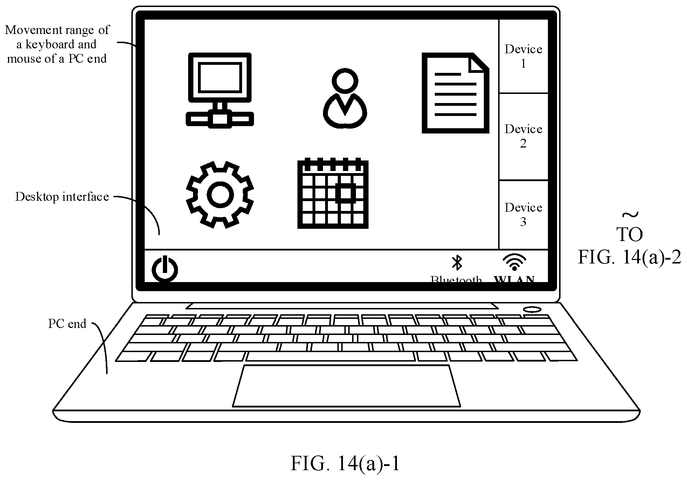

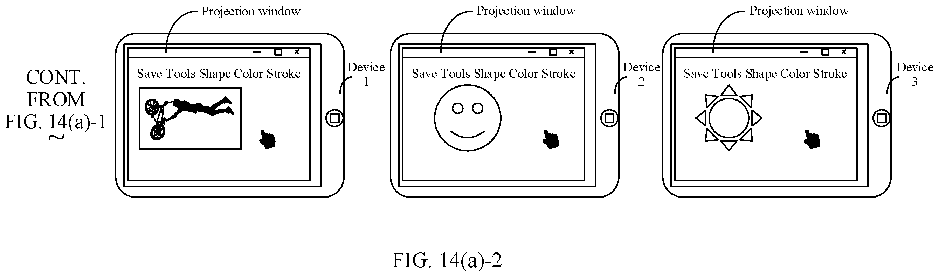

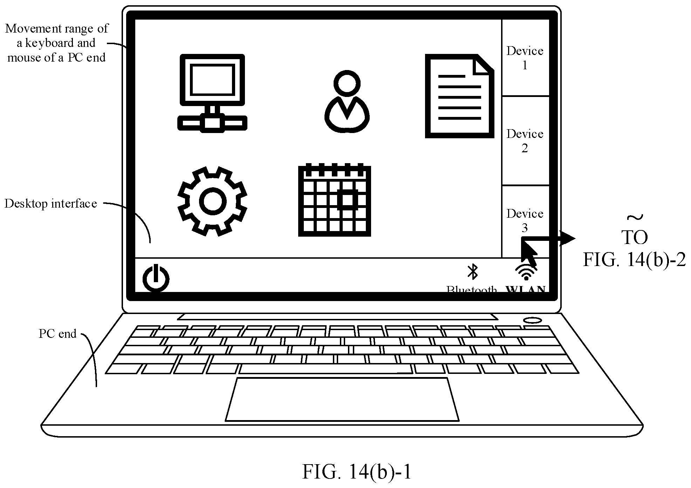

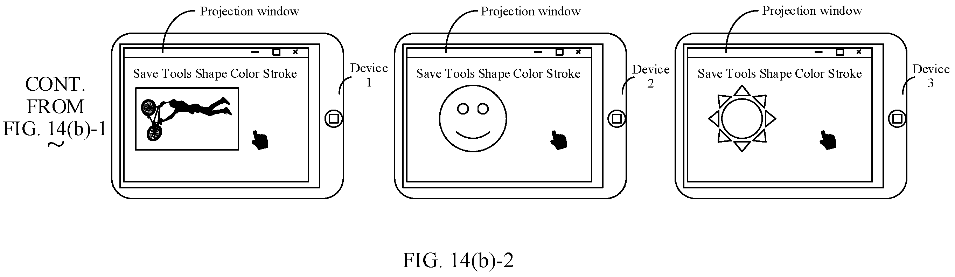

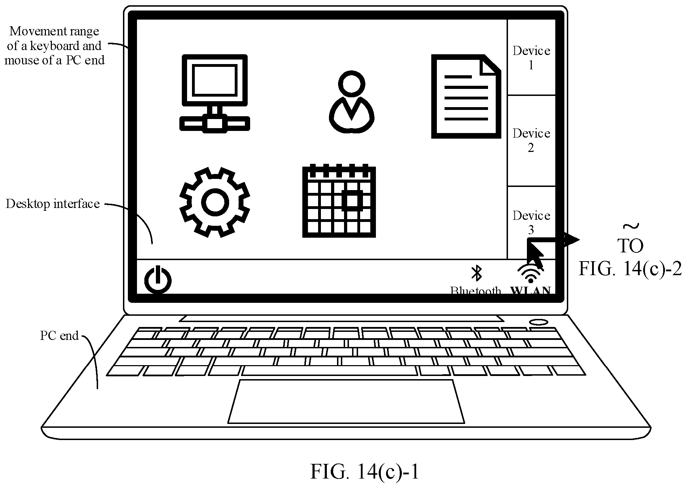

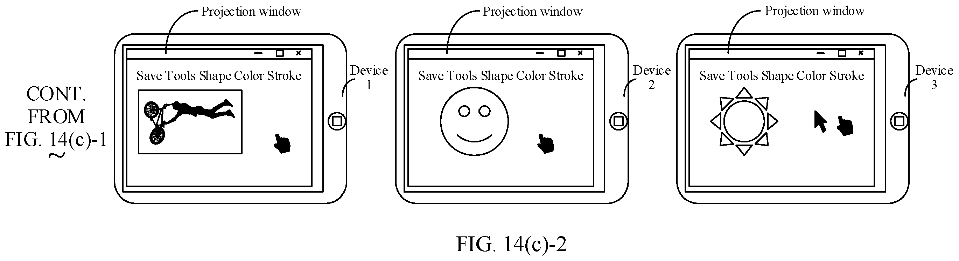

FIG. 14(a)-1, FIG. 14(a)-2, FIG. 14(b)-1, FIG. 14(b)-2, FIG. 14(c)-1, and FIG. 14(c)-2 are a diagram 1 of sharing a keyboard and mouse according to an embodiment of this application;

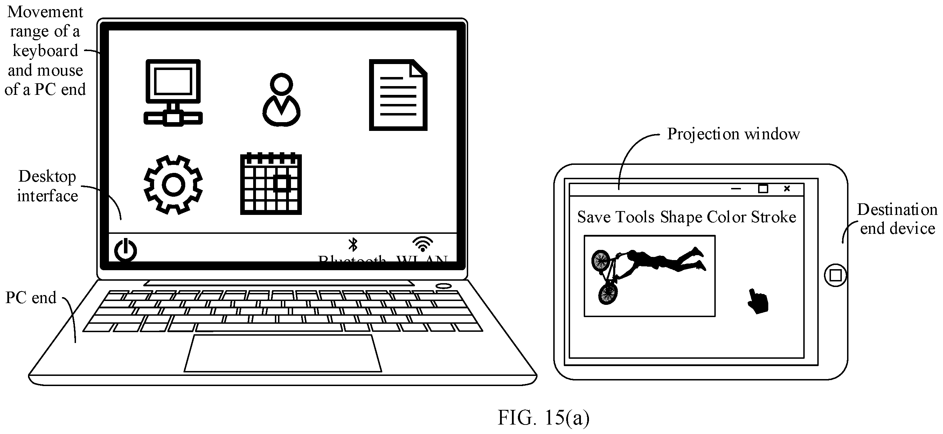

FIG. 15(a) to FIG. 15(c) are a diagram 2 of sharing a keyboard and mouse according to an embodiment of this application; and

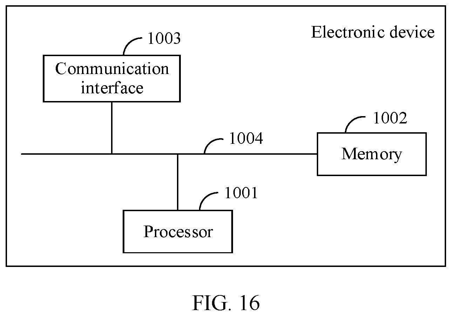

FIG. 16 is a diagram of an electronic device according to an embodiment of this application.

### DESCRIPTION OF EMBODIMENTS

The following describes the technical solutions in embodiments of this application with reference to the accompanying drawings in embodiments of this application. In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In a scenario in which a personal computer (Personal Computer, PC) end performs projection to a tablet computer (portable android device, PAD) end, it is assumed that a user develops a game on the PC end. In one aspect, a game scenario needs to be drawn through a scenario drawing interface. In another aspect, game scenario switching logic, for example, scenario import, scenario switching logic (sequence switching and jump switching), scenario switching triggering conditions, background music configuration, and the like needs to be designed through a game design interface. The game scenario is a static background in the game, for example, a building, a landscape, a street, a scenery, a map, or the like. Because a presentation effect of the game scenario drawn by using the PC end is usually poor, the PC end may start a projection function in response to a user operation, use a screen of the PAD end as an extended screen of the PC end, transmit the scenario drawing interface of the PC end to the PAD end, and display the scenario drawing interface on the PAD end. In addition, the PC end displays the game design interface, and the switching logic of the game scenario can be designed in response to an operation that is for the game design interface and that is input through a keyboard and mouse of the PC. The PC end displays the scenario drawing interface, and the game scenario can be drawn in response to an operation that is for the scenario drawing interface and that is input through the screen of the PAD end. To duplicate a target game scenario drawn through the PAD end to the game design interface on the PC end, the PC end may switch the extended mode in the projection function to the sharing mode in response to a user operation, then the PC end responds to a cursor movement operation input through the keyboard and mouse, and the PAD end displays a cursor corresponding to the keyboard and mouse of the PC end. In this way, the keyboard and mouse of the PC end can traverse to a keyboard and mouse of the PAD end, and the PAD end can share the keyboard and mouse with the PC. Through a drag operation of the keyboard and mouse of the PC end for the target game scenario, the target game scenario displayed on a projection interface of the PAD end is duplicated to the PC end.

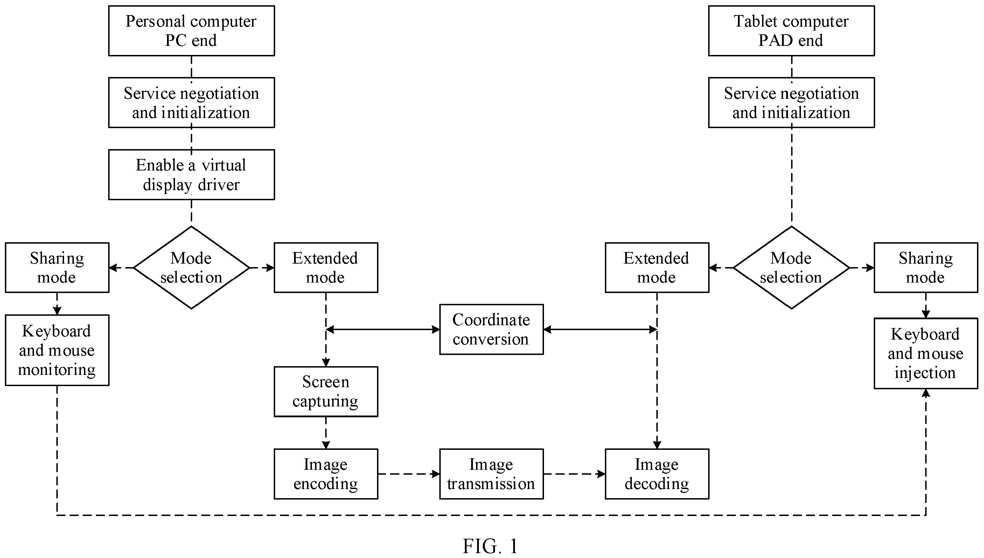

FIG. 1 is a diagram of a principle of a projection method according to a related technology. In a process in which a PC end starts a projection function to perform projection to a PAD end, a virtual video channel is first established between the PC end and the PAD end, and bilateral service negotiation and initialization are completed. Then, the PC end triggers enabling of a virtual display driver, and the virtual display driver is configured to drive the PAD end to display a projection interface. Next, the PC end responds to a mode selection operation input by a user. When an extended mode is selected, the PC end performs screen capturing on the projection interface, then performs image encoding on the captured projection interface (including a plurality of consecutive images obtained through screen capturing on the projection interface at a fixed time interval), and sends an encoded projection interface to the PAD end through the virtual video channel. The PAD end receives the encoded projection interface, and the PAD end renders and displays a decoded projection interface.

The service negotiation means that a source end device and a destination end device reach an agreement on a projection mode, projection time, a projection-related protocol, and the like based on respective operating systems. The projection-related protocol may include at least one of the following: a data transmission protocol, a screen display conversion protocol, a mouse positioning coordinate conversion protocol, a keyboard and mouse service protocol (a keyboard and mouse monitoring protocol and a keyboard and mouse injection protocol), a drag monitoring protocol, and the like. The initialization is an initial setting for implementing the projection function. Generally, the initial setting is automatic and uniform, for example, assigning a value to a variable, allocating storage space, setting a process processing priority, and driving related hardware. The foregoing variable may be an interface display size of a projection interface on the PC end, a screen size of the PC end, a mouse display attribute of the PC end, or the like.

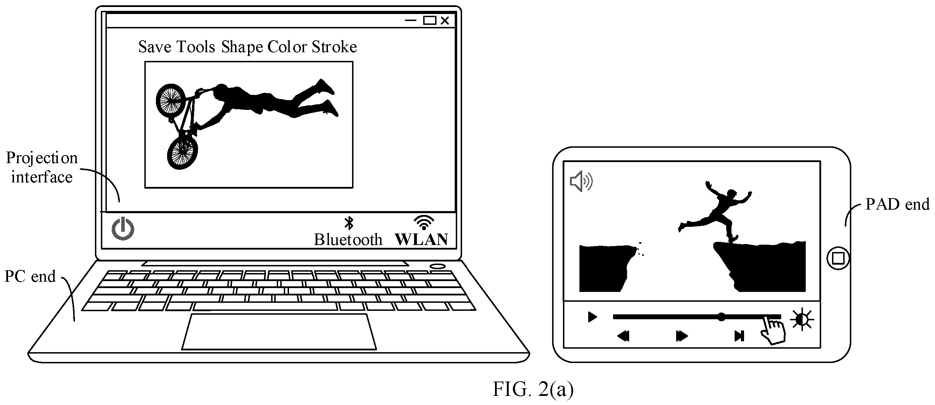

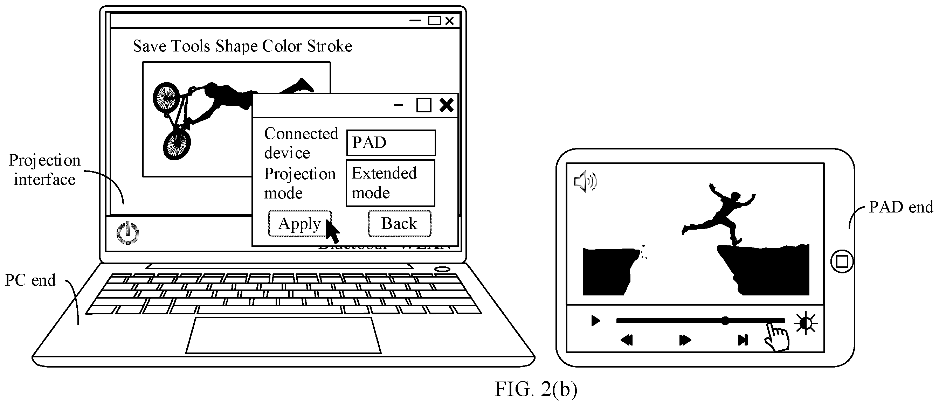

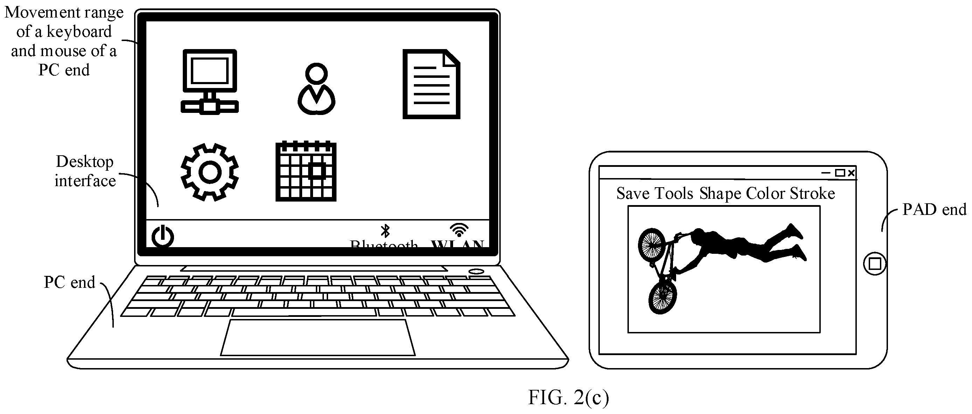

For example, FIG. 2(a) to FIG. 2(f) are diagrams of projection in an extended mode according to a related technology. When the extended mode is selected, as shown in FIG. 2(a), the PC end displays a projection interface, and the PAD end displays a video playing interface. As shown in FIG. 2(b), the PC end starts a projection function in response to a projection start operation for the extended mode on a projection setting interface, and sends, to the PAD end, the projection interface that the user wants to display, and the PAD end displays the video playing interface. As shown in FIG. 2(c), the projection interface is displayed in full screen on the PAD end, and the PC end may display the projection interface or another interface (for example, a desktop interface on the PC end). A movement range of the keyboard and mouse of the PC end is a screen area of the PC end, and an operation can be performed in response to content displayed on the screen of the PC end. A movement range of the keyboard and mouse or a touchscreen of the PAD end is a screen area of the PAD end, and an operation can be performed in response to the projection interface displayed on the screen of the PAD end.

The PC end switches the extended mode to a sharing mode in response to a mode switching operation of the user. In this case, a keyboard and mouse monitoring service is set on the PC end (that is, the keyboard and mouse of the PC end are monitored by using a hook function), and a keyboard and mouse injection service is set on the PAD end (that is, a plurality of pieces of keyboard and mouse information are allowed to be simultaneously accessed). Once it is detected that the keyboard and mouse of the PC end are out of a boundary of the screen area of the PC end, and a keyboard and mouse traversal event is triggered, the keyboard and mouse of the PC end are connected to the PAD end, and an operation input by the keyboard and mouse of the PC end is converted into an operation input by the keyboard and mouse of the PAD end, for example, moving, clicking, and dragging, based on a correspondence between screen coordinates on the PAD end and screen coordinates on the PC end. Similarly, the keyboard and mouse monitoring service is set on the PAD end, and the keyboard and mouse injection service is set on the PC end. Once it is detected that the keyboard and mouse of the PAD end are out of a boundary of the screen area of the PAD end, and a keyboard and mouse traversal event is triggered, the keyboard and mouse of the PAD end are connected to the PC end, and an operation input by the keyboard and mouse of the PAD end is converted into an operation input by the keyboard and mouse of the PC end, for example, moving, clicking, and dragging, based on a correspondence between screen coordinates on the PC end and screen coordinates on the PAD end.

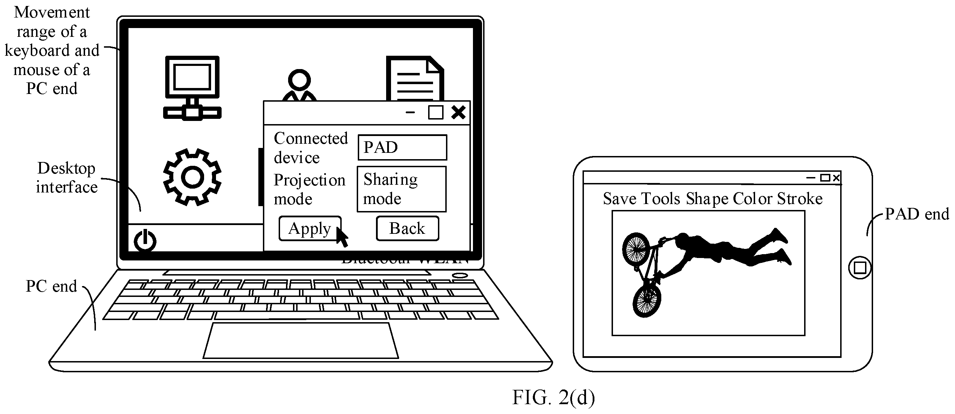

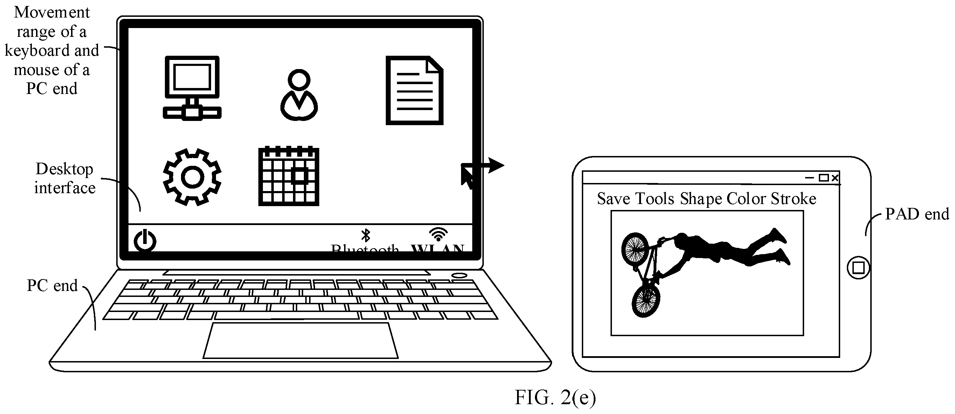

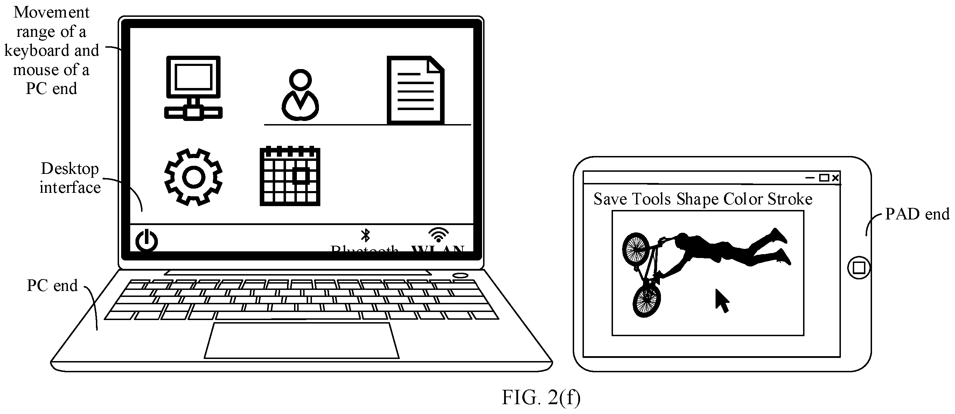

For example, based on the foregoing example, as shown in FIG. 2(d), the PC end sets, in response to the projection start operation for the sharing mode on the projection setting interface, the keyboard and mouse shared by the PC end and the PAD end. As shown in FIG. 2(e), if the keyboard and mouse of the PC end still move rightward after reaching a boundary of a left screen area of the PC end, a keyboard and mouse traversal event is triggered. As shown in FIG. 2(f), based on the correspondence between the screen coordinates on the PAD end and the screen coordinates on the PC end, a cursor of the keyboard and mouse of the PC end is displayed on the screen of the PAD end.

In this way, switching between the extended mode and sharing mode of the projection function is implemented, to implement screen sharing and keyboard and mouse sharing between the PC end and PAD end. When the user needs to switch from the extended mode to the sharing mode, or switch from the sharing mode to the extended mode, the user needs to re-respond to the mode selection operation input by the user to implement mode switching. In addition, each time after the mode switching is performed, the hook function needs to be re-set or image encoding needs to be performed for a different mode.

In this way, from a perspective of user experience, the extended mode and the sharing mode are isolated from each other, and device sharing and system convergence in a real sense are not implemented. Especially, screen sharing and keyboard and mouse sharing functions can be implemented only after each mode switching is performed. To switch from the extended mode to the sharing mode, screen capturing, image encoding, and projection interface sending need to be suspended. In addition, the hook function is set on the PC end and keyboard and mouse injection is set on the PAD end. This process requires specific response time, which increases a possibility of screen flickering. To switch from the sharing mode to the extended mode, keyboard and mouse services of the PC end and the PAD end (including monitoring of the mouse of the PC end by the hook function of the PC end and monitoring of whether the PAD end can receive control of double keyboards and mice) need to be suspended. In addition, the PC performs screen capturing, image encoding, and projection interface sending again. This process requires specific response time, which increases a possibility of screen flickering.

In addition, the projection interface is displayed in full screen on the PAD end, and covers other content (for example, a running application, a received notification message, and an application icon) on the screen of the PAD end. This affects control of the PAD end. Consequently, the PAD end cannot flexibly control the projection interface in response to a user operation.

It may be understood that projection performed by the PC end to the PAD end further includes a mirror mode. In the mirror mode, an interface currently displayed on the screen of the PC end is used as the projection interface, and is projected to the screen of the PAD end. In other words, the interfaces displayed on the PC end and the PAD end are consistent, and only need to be controlled on the PC end. To be specific, a mode is switched to the sharing mode after the mirror mode is selected, for the projection interface, operations that can be performed on the PC end and the PAD end are consistent, and data does not need to be transmitted between different interfaces. Therefore, the mirror mode is not considered in the foregoing scenario.

An embodiment of this application provides a projection method, applied to a projection system. The projection system includes a source end device and a destination end device. The source end device starts projection, and both the source end device and the destination end device start keyboard and mouse monitoring and keyboard and mouse injection services. This can avoid mode switching between an extended mode and a sharing mode, and further avoid screen flickering. In addition, the destination end device creates a projection window to display a projection interface. Therefore, when the destination end device displays the projection interface in the projection window in response to an adjustment operation (for example, minimizing, maximizing, zooming out, or zooming in) for the projection interface, other content (for example, a running application, a received notification message, or an application icon) can be further displayed on the screen of the PAD end. This reduces impact of the projection interface on the PAD end, and enables the PAD end to flexibly control the projection interface in response to a user operation.

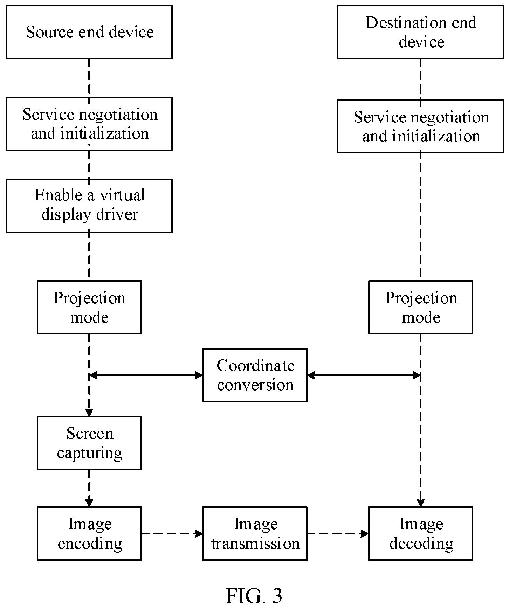

Based on the foregoing scenario, a principle of the projection method is described by using the PC end as the source end device for projection and using the PAD end as the destination end device for projection. Specifically, FIG. 3 is a diagram of a principle of a projection method according to an embodiment of this application. First, the source end device establishes a projection connection to the destination end device, and starts a projection function. The source end device establishes a virtual video channel between the source end device and the destination end device, and the source end device and the destination end device separately complete bilateral projection service negotiation and initialization. Then, the source end device triggers enabling of a virtual display driver, and the virtual display driver is configured to drive the destination end device to display the projection interface. Finally, in response to a projection operation input by a user, the source end device performs screen capturing on the projection interface, performs image encoding on the captured projection interface, and sends an encoded projection interface to the destination end device through the virtual video channel. The destination end device receives the encoded projection interface, and the destination end device renders and displays a decoded projection interface. The service negotiation means that the source end device and the destination end device reach an agreement on a projection mode, projection time, a projection-related protocol, and the like based on respective operating systems. The projection-related protocol may include at least one of the following: a data transmission protocol, a screen display conversion protocol, a mouse positioning coordinate conversion protocol, a keyboard and mouse service protocol (a keyboard and mouse monitoring protocol and a keyboard and mouse injection protocol), a drag monitoring protocol, and the like. The initialization is an initial setting for implementing the projection function. Generally, the initial setting is automatic and uniform, for example, assigning a value to a variable, allocating storage space, setting a process processing priority, and driving related hardware. The foregoing variable may be a screen size of the PC end, a mouse display attribute of the PC end, a screen size of the PAD end, a size range of the projection window of the PAD end, a mouse display attribute of the PAD, or the like.

In embodiments of this application, the source end device and the destination end device may be an electronic device like a mobile phone, a smartwatch, a camera, a tablet computer, an augmented reality (augmented reality, AR) device, a virtual reality (virtual reality, VR) device, a notebook computer, a handheld computer, a desktop computer, an ultra-mobile personal computer (ultra-mobile personal computer, UMPC), a server, or a television, or may be another electronic device including a wireless communication module and a display function. It should be noted that the operating system of the source end device may be the same as or different from the operating system of the destination end device.

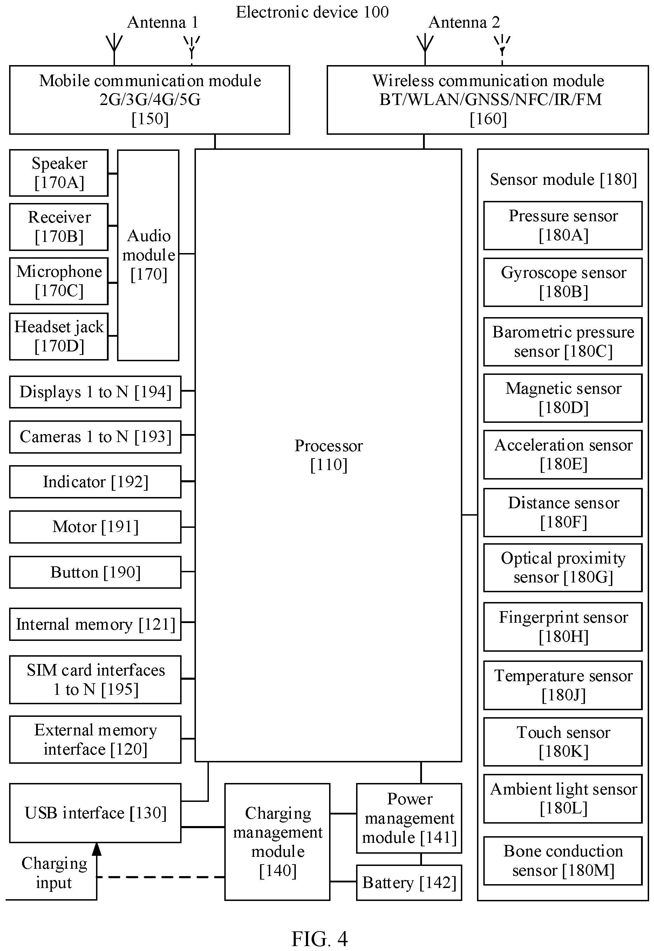

FIG. 4 is a diagram of a hardware structure of an electronic device according to an embodiment of this application. For example, the electronic device 100 shown in FIG. 4 may be a source end device, or may be a destination end device.

As shown in FIG. 4, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. The audio module 170 may include a speaker 170A, a receiver 170B, a microphone 170C, a headset jack 170D, and the like.

It may be understood that the structure shown in this embodiment constitutes no specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication that is applied to the electronic device 100 and that includes 2G/3G/4G/5G or the like. In some embodiments, at least some function modules in the mobile communication module 150 may be disposed in the processor 110. In some embodiments, at least some function modules in the mobile communication module 150 may be disposed in a same component as at least some modules in the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module.

The electronic device 100 may implement functions such as a communication function and resource obtaining through the antenna 1, the antenna 2, the mobile communication module 150, the wireless communication module 160, and the like.

For example, when the electronic device 100 is the first device in the foregoing embodiment, the first device may receive, through the antenna 1, the antenna 2, the mobile communication module 150, the wireless communication module 160, and the like, a video address of a projection video sent by the second device, and obtain corresponding video content from a server based on the video address. Alternatively, when a user chooses to play a video on the first device, the first device may obtain the corresponding video content from the server through the antenna 1, the antenna 2, the mobile communication module 150, the wireless communication module 160, and the like.

For example, when the electronic device 100 is the second device in the foregoing embodiment, the second device may send a video address of a projection video to the first device through the antenna 1, the antenna 2, the mobile communication module 150, the wireless communication module 160, and the like. Alternatively, when the user chooses to play a video on the second device, the first device may obtain the corresponding video content from the server through the antenna 1, the antenna 2, the mobile communication module 150, the wireless communication module 160, and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In some embodiments, the electronic device 100 may include one or N displays 194, where N is a positive integer greater than 1.

The display 194 may display a desktop interface on the electronic device 100 of the user, or may display any interface opened in response to a user operation, or may display, through a projection window, a projection interface projected by another electronic device, or may display some function controls, application icons, and the like.

For example, when the electronic device 100 is the source end device in the foregoing embodiment, the display 194 of the source end device may display a first interface (which may be used as a projection interface), or may display another interface (for example, a desktop interface on a PC end), or may display some function controls, application icons, and the like, or may respond to an operation performed by a keyboard and mouse of the source end device or a keyboard and mouse of the destination end device on a currently displayed interface.

For example, when the electronic device 100 is the destination end device in the foregoing embodiment, the display 194 of the destination end device may display the projection interface in the projection window, or may display any interface opened in response to the user operation, or may display some function controls, application icons, and the like, or may respond to the operation performed by the keyboard and mouse of the source end device or the keyboard and mouse of the destination end device on the current display interface.

The electronic device 100 may implement a photographing function through the ISP, the camera 193, the video codec, the GPU, the display 194, the application processor, and the like. The ISP is configured to process data fed back by the camera 193, and the camera 193 is configured to capture a static image or a video. In some embodiments, the electronic device 100 may include one or N cameras 193, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing.

For example, when the electronic device 100 is the source end device in the foregoing embodiment, the processor 110 runs the instructions stored in the internal memory 121, so that the source end device may establish a virtual video channel between the source end device and the destination end device when detecting that the display 194 receives the started projection service, and complete bilateral service negotiation and initialization. Alternatively, the source end device may trigger enabling of a virtual display driver, and the virtual display driver is configured to drive the destination end device to display the projection interface. Alternatively, in response to the projection operation input by the user, the source end device may perform screen capturing on the projection interface, perform image encoding on the captured projection interface, and send an encoded projection interface to the destination end device through the virtual video channel. Alternatively, when it is detected that the display 194 receives the user operation, the source end device may further perform an operation on the screen of the source end device, for example, display the projection interface, start an application that is of the source end device and that corresponds to the user operation, delete a file, or edit a document. Alternatively, when it is detected that the display 194 triggers a keyboard and mouse traversal event, the source end device may perform an operation on the screen of the source end device, the projection window of the destination end device, and the projection interface, for example, change a display area size of the projection window, change a display area location of the projection window, display a cursor location corresponding to the mouse, and drag a target file.

For example, when the electronic device 100 is the destination end device in the foregoing embodiment, the processor 110 runs the instructions stored in the internal memory 121, so that the destination end device may establish a virtual video channel between the destination end device and the source end device, and complete bilateral service negotiation and initialization. Alternatively, the destination end device may receive an encoded projection interface sent by the source end device, decode the encoded projection interface, and indicate the display 194 to display a rendered projection interface. Alternatively, when it is detected that the display 194 receives a user operation, the destination end device may perform an operation on a screen of the destination end device, for example, start an application that is of the destination end device and that corresponds to the user operation, delete a file, edit a document, change a display area size of the projection window, change a display area location of the projection window, and display a cursor location corresponding to the mouse. Alternatively, when it is detected that the display 194 triggers a keyboard and mouse traversal event, the destination end device may perform an operation on the screen of the source end device, for example, drag a target file, display the projection interface, change a projection interface, and start an application that is of the source end device and that corresponds to a user operation.

The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a highspeed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the speaker, the receiver, the microphone, and the headset jack in the audio module 170, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The speaker, also referred to as a "loudspeaker", is configured to convert an audio electrical signal into a sound signal. The electronic device 100 may be used to listen to music or answer a hands-free call over the speaker. The receiver, also referred to as an "earpiece", is configured to convert an electrical audio signal into a sound signal. When the electronic device 100 is used to answer a call or listen to a voice message, the receiver may be put close to a human ear to listen to a voice. A microphone, also referred to as a "mike" or a "mic", is configured to convert a sound signal into an electrical signal. When making a call or sending a voice message, a user may place the mouth of the user near the microphone to make a sound, to input a sound signal to the microphone. At least one microphone may be disposed in the electronic device 100. The headset jack is configured to connect to a wired headset.

The button 190 includes a power button, a volume button, and the like. The button 190 may be a mechanical button, or may be a touch button. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The electronic device 100 may support one or N SIM card interfaces, where N is a positive integer greater than 1. The electronic device 100 interacts with a network through the SIM card, to implement functions such as conversation and data communication.

When the projection method in embodiments of this application is implemented based on the electronic device 100 shown in FIG. 4, the source end device may send keyboard and mouse location information to the destination end device through the antenna 1, the antenna 2, the mobile communication module 150, the wireless communication module 160, and the like, and respond to a keyboard and mouse control instruction generated based on the user operation, and an encoded projection interface. An operation object of the user operation may be the projection window or the projection interface of the destination end device. After receiving the encoded projection interface, the destination end device decodes and renders the encoded projection interface, and displays a corresponding projection interface through the display 194.

The destination end device may send the keyboard and mouse location information to the source end device through the antenna 1, the antenna 2, the mobile communication module 150, the wireless communication module 160, and the like, and respond to the keyboard and mouse control instruction generated based on the user operation. The operation object of the user operation may be the display 194 of the source end device, and the projection window or the projection interface of the destination end device. After receiving the encoded projection interface, the source end device decodes and renders the encoded projection interface, and displays a corresponding projection interface through the display 194.

A software system of the electronic device 100 may use a layered architecture, an eventdriven architecture, a microkernel architecture, a micro service architecture, or a cloud architecture. In this embodiment of the present invention, an Android system of a layered architecture is used as an example to illustrate the software structure of the electronic device 100.

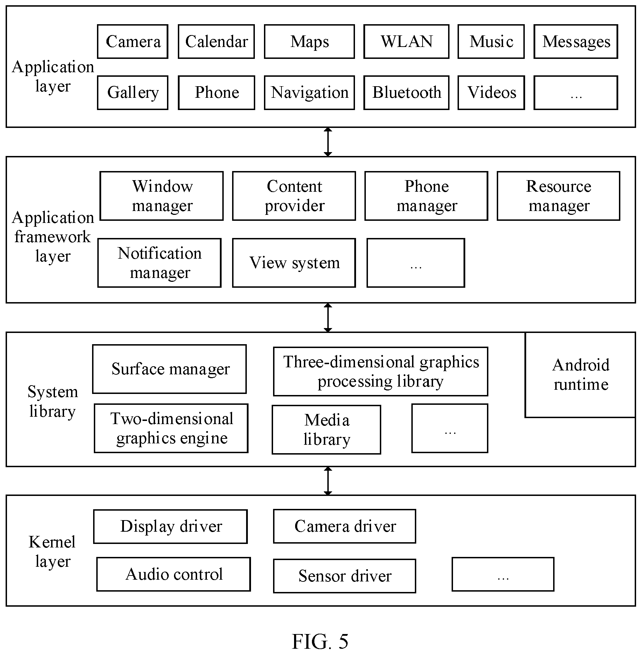

FIG. 5 is a diagram of a software structure of the electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 5, the application packages may include applications such as Camera, Gallery, Calendar, Phone, Maps, Navigation, WLAN, Bluetooth, Music, Videos, and Messages.

For example, when the electronic device 100 is the first device and/or the second electronic device in the foregoing embodiments, the application package may further include a video application supporting a projection function, an application supporting playing of a projection video, an application used to implement the projection function, and the like.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

When the projection method in embodiments of this application is implemented based on the electronic device 100 shown in FIG. 5, an operating system of a source end device interacts with an operating system of a destination end device. A software structure of the electronic device is described by using the source end device as an example. First, the source end device may start an application installed in the operating system of the source end device, then open a projection interface through the application framework layer and the system library, and then establish a virtual video channel between the source end device and the destination end device through driving of a communication module at the kernel layer of the source end device. In a process of establishing the virtual video channel, the source end device completes service negotiation and initialization. Finally, screen capturing is performed on the projection interface through the media library in the system library, then a video stream corresponding to the captured projection interface is encoded through the application framework layer, and finally an encoded video stream is sent through the kernel layer.

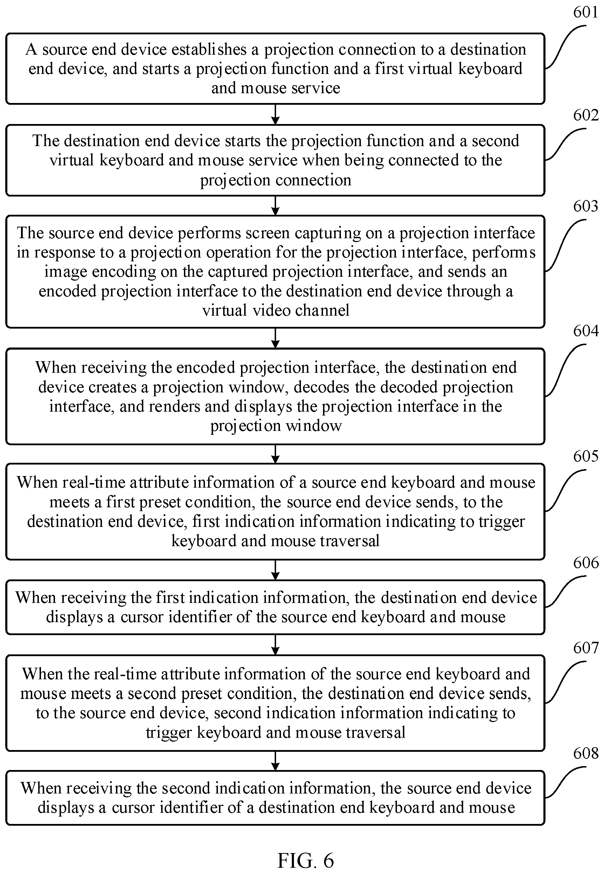

The following describes the projection method provided in embodiments of this application by using an example in which a PC end performs projection to a PAD end. Specifically, FIG. 6 is a flowchart of a projection method according to an embodiment of this application. The method may include the following step 601 to step 608.

Step 601: A source end device establishes a projection connection to a destination end device, and starts a projection function and a first virtual keyboard and mouse service.

In some embodiments, a projection application is separately installed on the PC end and the PAD end. The PC end is used as the source end device. When the PC end sets the PAD end as the destination end device through the projection application, the projection function is started, and a projection connection between the PC end and the PAD end is established. The PC end obtains, through the projection connection, a keyboard and mouse-related parameter of the PAD end, for example, a screen size of the PAD end, a size range of a projection window of the PAD end, and a mouse display attribute of the PAD end, sent by the PAD end. The PAD end obtains, through the projection connection, a keyboard and mouse-related parameter of the PC end, for example, a screen size of the PAD end and the PC end and a mouse display attribute of the PC end, sent by the PC end.

It may be understood that the PC end and the PAD end reach an agreement on projection control permission, projection time, a projection-related protocol, and the like based on respective operating systems, to complete service negotiation. The PC end and the PAD end complete initialization based on the keyboard and mouse-related parameter of the PC end and the keyboard and mouse-related parameter of the PAD end respectively. The projection-related protocol may include at least one of the following: a data transmission protocol, an image encoding protocol, a screen display conversion protocol, a mouse positioning coordinate conversion protocol, a keyboard and mouse service protocol (a keyboard and mouse monitoring protocol and a keyboard and mouse injection protocol), a drag monitoring protocol, and the like. The initialization is an initial setting for implementing the projection function. Generally, the initial setting is automatic and uniform, for example, assigning a value to a variable, allocating storage space, setting a process processing priority, and driving related hardware. The foregoing variable may be a screen size of the PC end, a mouse display attribute of the PC end, a screen size of the PAD end, a size range of the projection window of the PAD end, a mouse display attribute of the PAD, or the like.

In some embodiments, the projection connection is a data transmission channel established between the source end device and the destination end device. The projection connection may be in a long link manner, to improve a speed of sending projection content. After data is transmitted between the source end device and the destination end device once, a connection is not disabled, and a connected state is maintained for a long time. If data needs to be transmitted subsequently, the connection is directly reused, and there is no need to establish a new connection.

It may be understood that in the projection connection, a device virtual channel may be set. The device virtual channel is a virtual channel used to transmit a projection interface. Establishing the device virtual channel means establishing a dedicated communication channel by using network resources of the source end device and a virtualization technology, to ensure that the projection interface can be transmitted in real time.

In some embodiments, the first virtual keyboard and mouse service includes a keyboard and mouse monitoring protocol and a keyboard and mouse injection protocol, is configured to monitor a keyboard and mouse location of the source end device, and is further configured to receive another keyboard and mouse to control the source end device. The keyboard and mouse location is an operation response location of the mouse or keyboard, and is used to determine a correspondence between screen display content and a keyboard and mouse operation, and determine a response object of the keyboard and mouse operation based on the correspondence.

In some embodiments, the source end device displays a first interface, where the first interface may be any interface that can be displayed on the source end device.

Step 602: The destination end device starts the projection function and a second virtual keyboard and mouse service when being connected to the projection connection.

In some embodiments, the destination end device is connected to the projection connection, in other words, the communication channel established between the source end device and the destination end device can be used to transmit projection-related data.

In some embodiments, the second virtual keyboard and mouse service includes a keyboard and mouse monitoring protocol and a keyboard and mouse injection protocol, is configured to monitor a keyboard and mouse location of the destination end device, and is further configured to receive another keyboard and mouse to control the destination end device. The keyboard and mouse location is an operation response location of the mouse or keyboard, and is used to determine a correspondence between screen display content and a keyboard and mouse operation, and determine a response object of the keyboard and mouse operation based on the correspondence.

Step 603: The source end device performs screen capturing on the projection interface in response to a projection operation for the projection interface, performs image encoding on the captured projection interface, and sends an encoded projection interface to the destination end device through the virtual video channel.

In some embodiments, the projection interface is an interface that can be displayed on the source end device and that needs to be displayed on the destination end device in a projection manner. For example, the projection interface may be a web page interface, a video playing interface, an audio playing interface, an image editing interface, a document editing interface, or any running interface of an application.

In some embodiments, after the source end device starts the projection function, when the source end device displays the projection interface, the source end device can receive the projection operation for the projection interface. The projection operation may be input through a peripheral like a mouse, a keyboard, a screen, a microphone, or a camera, or may be received from another device through a communication module. For example, the projection operation may be a two-finger left-slide gesture operation received on the screen, or may be a trigger operation for starting projection in a mouse right-click shortcut menu, or may be received voice information of "projection", or may be an image captured by the camera, which is a preset image, or may be a plurality of operations that are consecutively input based on a preset operation path.

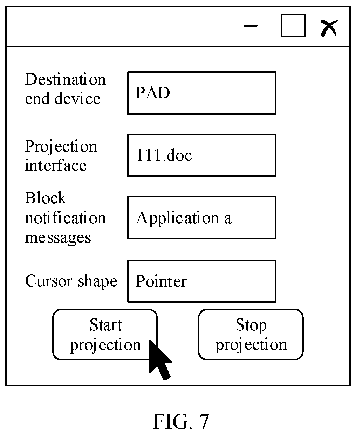

In some embodiments, the source end device displays a projection setting interface in response to a user operation, and the projection setting interface may be used to receive the projection operation for the projection interface. FIG. 7 is a diagram of a projection setting interface according to an embodiment of this application. As shown in FIG. 7, a preset control, for example, "Start projection" or "Stop projection", may be set on the projection setting interface, and is used to trigger a projection operation or trigger cutting off of a projection operation. As shown in FIG. 7, the projection setting interface may be used to set the destination end device, the projection interface, whether to block a message of a preset application, a cursor shape of a mouse, and the like. The projection interface may be an interface currently displayed on a screen of the source end device, or may be any interface that is running at a front end of the source end device, or may be any interface that is suspended at a back end of the source end device.

It should be noted that the projection interface is, by default, an interface currently displayed on the source end device, or the projection interface may be set as one or more interfaces running at the front end of the source end device.

In some embodiments, the source end device and the destination end device may be connected in a wired manner, or may be connected in a wireless manner. When the source end device and the destination end device are connected in the wireless manner, the source end device and the destination end device are in a same local area network, and implement projection through a local area network router.

In some embodiments, after responding to the projection operation for the projection interface, the source end device may further send a projection request to the destination end device. The projection request is used to request the destination end device to receive and display the projection interface. It may be understood that the projection interface may change based on an operation of the source end device or the destination end device. Therefore, in a projection process, the projection interface needs to be obtained and sent at a preset time interval. Therefore, the projection request needs to be sent in advance, and the projection interface can be displayed on the destination end device only when the destination end device agrees. The source end device may send the projection request to the destination end device through Bluetooth, a wireless local area network, or a connection line.

It may be understood that when the destination end device is an electronic device with a simple function, for example, a television or a refrigerator, the destination end device agrees to the projection request by default. When the destination end device is an electronic device with a complex function, for example, a mobile phone, a PC, or a PAD, after the destination end device receives the projection request, the source end device may perform projection by using the destination end device in response to a case in which the user allows projection.

In some embodiments, screen capturing means directly capturing data on the projection interface through the source end device without accessing an underlying database or interface. The projection interface is captured in a screen capturing manner, so that the projection interface can be intuitively displayed on the destination end device.

In some embodiments, image encoding is performed on the captured projection interface, in other words, the projection interface is compressed, to improve efficiency of transmitting the projection interface. For example, an image encoding method may include at least one of the following: symbol coding, predictive coding, transform coding, subband coding, wavelet transform coding, and fractional dimension encoding.

In some other embodiments, the projection interface may change due to an operation of the source end device or the destination end device. Therefore, in the projection process, the projection interface needs to be obtained and sent at a preset time interval. Therefore, image encoding is performed on the captured projection interface, and a video encoding method may be further used, to improve a refresh speed of the projection interface and avoid frame freezing.

It should be noted that, when the projection interface is an audio and video interface, the source end device may change a destination address for loading the audio and video interface, to indicate a server to send the encoded projection interface to the destination end device through a routing path between the server and the destination end device.

In some embodiments, the source end device and the destination end device may first perform initialization (for example, establish a device virtual channel, start a first simulated keyboard and mouse service, and start a second simulated keyboard and mouse service), and then the source end device may send the encoded projection interface to the destination end device, to ensure that the destination end device can receive, in a timely manner, the encoded projection interface sent by the source end device. Although the initialization process requires specific time, time for the destination end device to display the projection interface after the source end device responds to the projection operation for the projection interface can be reduced, and waiting time of the user can be reduced, to improve user experience.

In some other embodiments, the source end device may first send the encoded projection interface to the destination end device, and then perform initialization (for example, establish a device virtual channel, start a first simulated keyboard and mouse service, and start a second simulated keyboard and mouse service). In this way, before the encoded projection interface is sent, neither the source end device nor the destination end device needs to allocate a system resource to start the projection service. This can avoid occupation of the system resource when the allocated system resource is not used, and improve a device running speed.

Step 604: When receiving the encoded projection interface, the destination end device creates a projection window, decodes the decoded projection interface, and renders and displays the projection interface in the projection window.

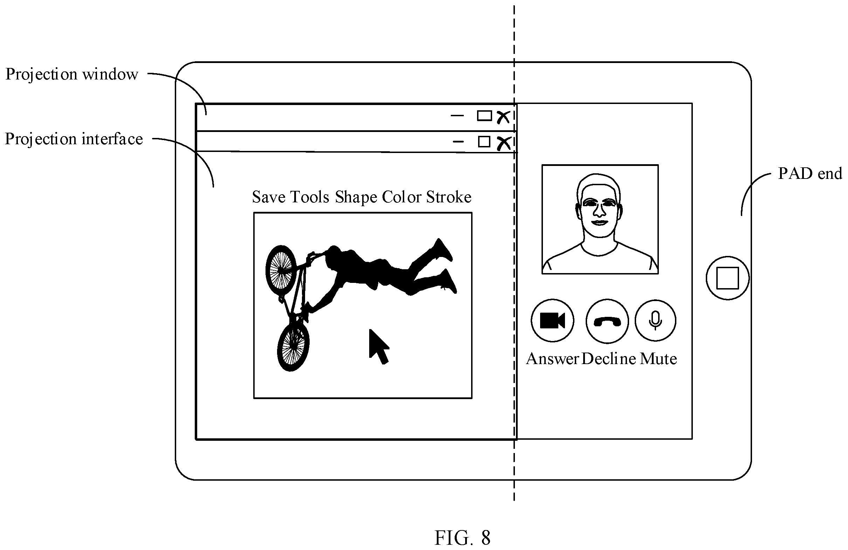

In some embodiments, the projection window is used to display the projection interface, and the projection window may be established through a window establishment function provided by an operating system of the destination end device. It may be understood that, as shown in FIG. 8, the projection window includes a first display area used to display the projection interface, and further includes a second display area used to display a window editing control. Specifically, the window editing control includes at least one of the following controls: a minimize control, a maximize control, a zoom-in control, a zoom-out control, and the like. A size of the projection window is less than or equal to a size of a destination end screen.

In this embodiment of this application, the second display area is further used to display a projection status (for example, a projection interface is being loaded, projection is being performed, or projection ends), a name of the source end device, an application to which the projection interface belongs, projection time, a current data transmission rate, a name of the destination end device, and the like.

In some other embodiments, the destination end device may receive and respond to an operation on the window editing control, to zoom in, zoom out, maximize, or minimize the projection window.

In an example, if the destination end device is a mobile phone or a PAD, after the projection window is minimized, windows of all programs that are not exited need to be searched for the projection window, and the projection window is displayed again in response to a tap operation on the projection window.

In another example, if the destination end device is a PC, after the projection window is minimized, a window identifier corresponding to the projection window is displayed on a taskbar, and the projection window is displayed again in response to a click operation on the window identifier corresponding to the projection window.

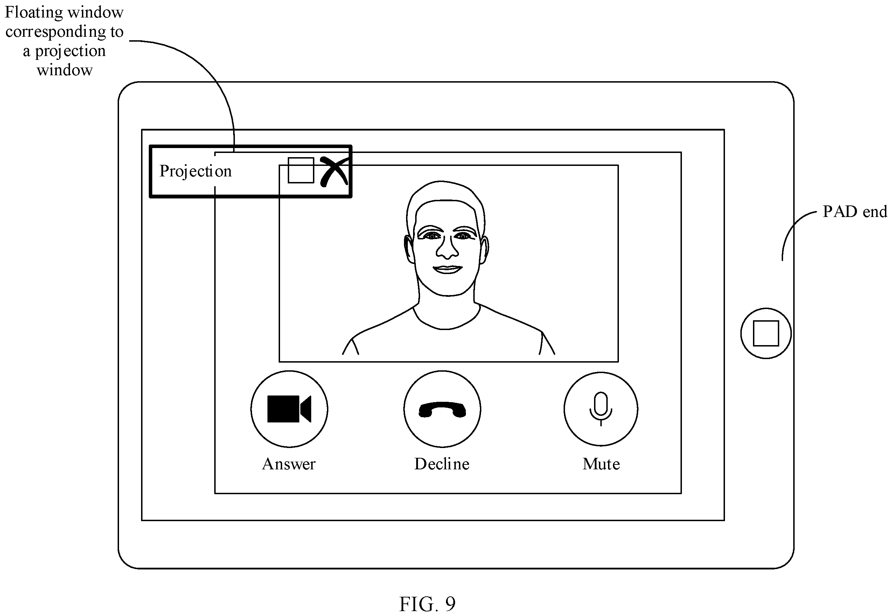

In still another example, as shown in FIG. 9, after the destination end device minimizes the projection window, a floating window corresponding to the projection window is displayed in the forefront of the screen of the destination end device. A problem that it is difficult to restore the projection window after the projection window is minimized can be avoided by using the floating window.

In some embodiments, the destination end device decodes the encoded projection interface according to a decoding algorithm corresponding to an encoding algorithm used by the source end device for the projection interface, to obtain the projection interface (which is the same as the projection interface displayed on the source end device). The encoding algorithm and an inverse algorithm of the encoding algorithm are determined and stored in a process of completing service negotiation after the projection service is started. When encoding and decoding are performed on the projection interface, a corresponding encoding algorithm and decoding algorithm are directly used.

In some embodiments, the destination end device renders and displays the decoded projection interface in the projection window. The projection interface adapts to a size of the projection window.

In some embodiments, the size of the projection window may be less than or equal to a size of a display of the destination end device. After starting the second keyboard and mouse service, the destination end device can detect that a destination end keyboard and mouse can control the projection window and another application displayed on the display of the destination end device. It should be noted that, in a detection process, the destination end device obtains real-time attribute information that is of a keyboard and mouse and that is retrieved by the destination end device, where the real-time attribute information includes a cursor location, a keyboard and mouse operation, a controlled object corresponding to the cursor location, and the like. The keyboard and mouse operation may be moving leftward, moving rightward, moving upward, moving downward, left-click, right-click, left-double-click, single-tapping a single keyboard character, single-tapping a plurality of keyboard characters at the same time, or the like.

In this way, the projection window is established in the destination end device to display the projection interface, so that when the destination end device displays the projection interface in the projection window in response to an adjustment operation (for example, minimizing, maximizing, zooming out, or zooming in) for the projection interface, other content (for example, a running application, a received notification message, or an application icon) can be further displayed on the screen of the PAD end. This reduces impact of the projection interface on the PAD end, and enables the PAD end to flexibly control the projection interface in response to a user operation.

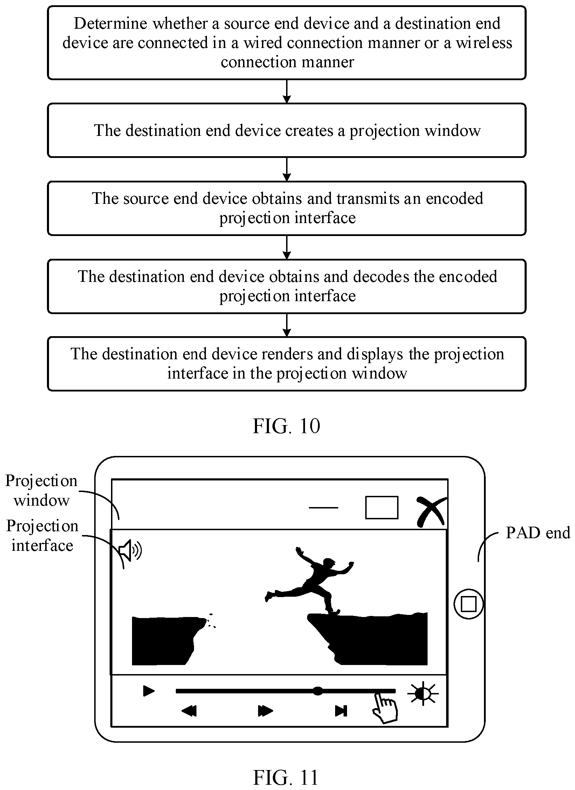

In some embodiments, as shown in FIG. 10, the source end device determines whether the source end device and the destination end device are connected in a wired connection manner or a wireless connection manner. The source end device obtains the projection interface at a preset time interval, performs image encoding on the captured projection interface, and sequentially sends the encoded projection interface at the preset time interval. When the preset time interval is greater than a general video playing frame frequency, projection interfaces that are consecutively encoded at the preset time interval may be used as an encoded virtual video. The encoded virtual video is transmitted to the destination end device through the virtual video channel. Window projection is performed on the destination end device based on the encoded virtual video (that is, the projection interfaces that are consecutively encoded at the preset time interval), to implement projection windowing. In other words, the destination end device renders and displays a decoded virtual video in the projection window (that is, consecutively updates and displays decoded projection interfaces in the projection window).

In some embodiments, the destination end device renders and displays the projection interface in the projection window, which may be an audio playing interface or a video playing interface. The destination end device may play a video file or an audio file in response to a trigger operation on a playing control on the projection interface in the projection window.

For example, as shown in FIG. 11, when the projection interface is an audio and video playing interface, the destination end device detects a tap operation performed by the destination end keyboard and mouse on a playing control on the video playing interface, and can play a video file on the video playing interface.

It should be noted that, when the projection interface is an audio and video interface, the destination end device may load the encoded projection interface from a server end.

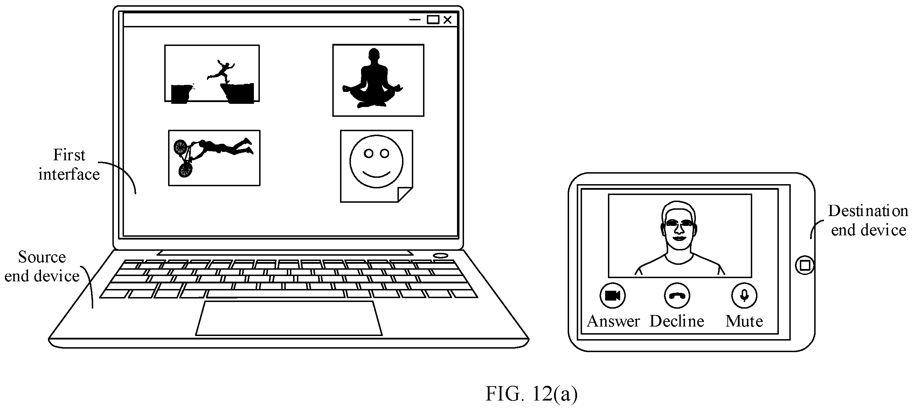

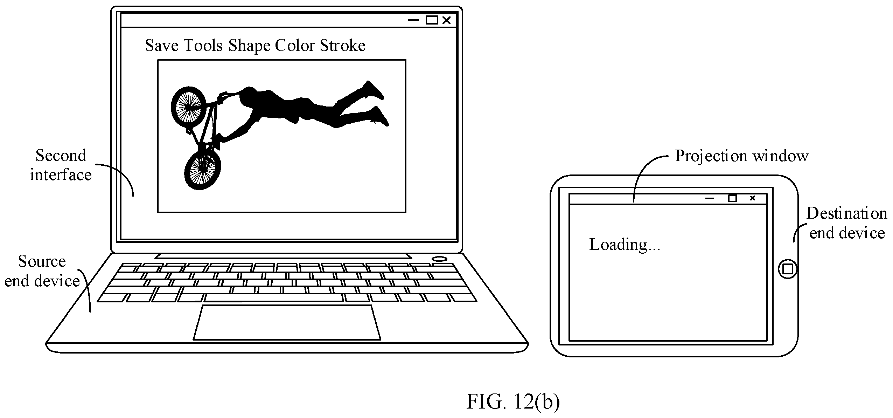

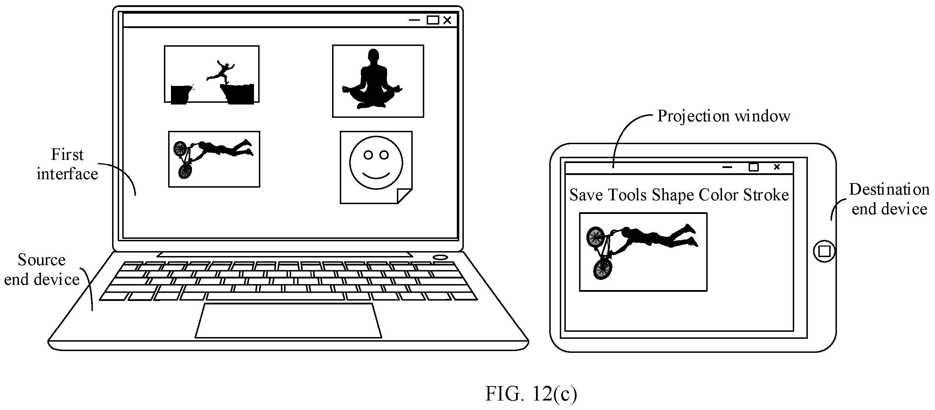

For a specific scenario, refer to FIG. 12(a) to FIG. 12(c). FIG. 12(a) to FIG. 12(c) are diagrams of a projection scenario according to an embodiment of this application. As shown in FIG. 12(a) to FIG. 12(c), as shown in FIG. 12(a), a source end device displays a first interface, and a destination end device displays a video interface. Then, as shown in FIG. 12(b), the source end device starts a projection function for a second interface, and the destination end device creates a projection window and displays indication information that is being loaded. The source end device establishes a virtual video channel between the source end device and the destination end device, completes service negotiation and initialization, and triggers enabling of a virtual display driver, and the destination end device establishes the virtual video channel between the destination end device and the source end device, and completes service negotiation and initialization. Then, the source end device performs a screen capturing operation on a projection interface (the second interface is determined as the projection interface), performs image encoding on the captured projection interface, and sends an encoded projection interface to the destination end device through the virtual video channel. After the source end device starts projection, as shown in FIG. 12(c), the source end device restores displaying of the first interface displayed before the projection, the destination end device receives the encoded projection interface, and the destination end device renders a decoded projection interface, and displays the second interface in the projection window.

Step 605: When real-time attribute information of a source end keyboard and mouse meets a first preset condition, the source end device sends, to the destination end device, first indication information indicating to trigger keyboard and mouse traversal.

The source end keyboard and mouse is an input device that is connected to the source end device, for example, a mouse or a keyboard, and that responds to a user operation based on a cursor display location, and may be configured to control the source end device.

In some embodiments, the first preset condition may include: a cursor location in the real-time attribute information of the source end keyboard and mouse reaches a boundary of the screen of the source end device, and an operation of continuing to move the source end keyboard and mouse out of the boundary is received. For example, if the cursor location in the real-time attribute information of the source end keyboard and mouse reaches a left boundary of the screen of the source end device, and a movement operation of moving the source end keyboard and mouse leftward is received, it is determined that the first preset condition is met. A case in which the first preset condition is met may be determined as the first preset condition for triggering keyboard and mouse traversal.

In some embodiments, a correspondence between a quantity of source end devices and a quantity of destination end devices is a many-to-many relationship. For example, one source end device projects a projection interface to a plurality of destination end devices, and a plurality of source end devices project respective projection interfaces to one destination end device.

It should be noted that, when the source end device performs projection to a plurality of destination end devices, the first preset condition may be that the cursor location in the real-time attribute information of the source end keyboard and mouse reaches a boundary of the screen of the source end device, and an operation of moving the source end keyboard and mouse towards a boundary corresponding to the destination end device is received. The source end device may set different boundaries corresponding to the destination end device, for example, a left boundary, a right boundary, and an upper-left boundary. The source end device may further obtain, through division, a specific boundary indication area on the screen of the source end device, and within the boundary indication area, trigger a boundary indication area corresponding to the destination end device, to trigger a keyboard and mouse traversal event.

Step 606: When receiving the first indication information, the destination end device displays a cursor identifier of the source end keyboard and mouse.

In some embodiments, the destination end device displays the cursor identifier of the source end keyboard and mouse. The source end keyboard and mouse may be configured to control the destination end device, and may be specifically configured to control the projection window and the projection interface in the projection window, or may be configured to control another application of the destination end device. It should be noted that the destination end device may set control permission of the source end device in response to a user operation. For example, it is set that operations such as shutdown, software update, and system file deletion cannot be performed.

In some embodiments, that the destination end device completes service negotiation includes starting a keyboard and mouse injection service in a keyboard and mouse service, so that the cursor identifier of the source end keyboard and mouse can be displayed on the destination end device. In other words, the destination end device may be controlled through the source end keyboard and mouse and the destination end keyboard and mouse. It may be understood that a cursor identifier of a source end mouse includes a first schematic mouse identifier and a source end device identifier. A cursor identifier of a destination end mouse includes a second schematic mouse identifier and a source end device identifier.

In some embodiments, the source end keyboard and mouse move from the source end device to the destination end device in response to a user operation, and coordinate conversion needs to be performed based on a screen size of the source end device and a screen size of the destination end device, to ensure that any location on the destination end device can be indicated by the keyboard and mouse, and enable control of the projection window, the projection interface in the projection window, or another application of the destination end device through the source end keyboard and mouse.

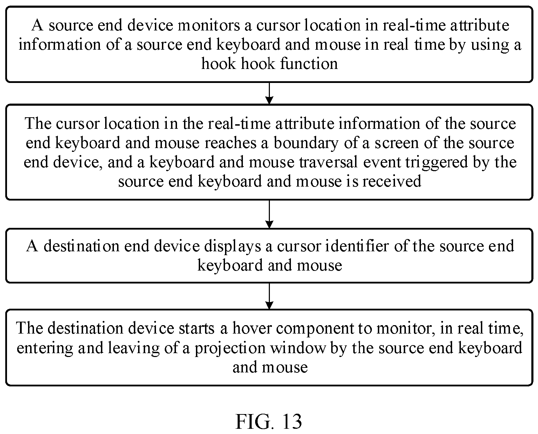

For example, as shown in FIG. 13, after the source end device starts a first keyboard and mouse service, the source end device monitors the cursor location in the real-time attribute information of the source end keyboard and mouse in real time by using a hook hook function. Once the cursor location in the real-time attribute information of the source end keyboard and mouse reaches the boundary of the screen of the source end device, and a keyboard and mouse traversal event triggered by the source end keyboard and mouse is received, the destination end device displays the cursor identifier of the source end keyboard and mouse, and starts a hover component to monitor, in real time, entering and leaving of the projection window by the source end keyboard and mouse.

It should be noted that, the projection interface of the destination end device in the projection window is essentially obtained through an operation performed by the source end device on the projection interface. Therefore, when the source end keyboard and mouse control the destination end device, it needs to be distinguished whether an operation object of the source end keyboard and mouse is the projection interface or another interface or control other than the projection window and the projection interface displayed on the destination end device.

In some embodiments, after the destination end device monitors whether a drag operation performed by the source end keyboard and mouse on the projection interface in the projection window is received, the destination end device may duplicate, to the source end device in response to the drag operation, content dragged to the projection interface.

For example, as shown in FIG. 14(a)-1 and FIG. 14(a)-2, the source end device is connected to three destination end devices, and a right side of the screen of the source end device is divided into three areas, to respectively display device names of the three destination end devices. As shown in FIG. 14(b)-1 and FIG. 14(b)-2, when moving to the right side, a keyboard and mouse cursor continues to slide rightward in an area corresponding to a device 3 in the three areas, to determine that the real-time attribute information of the source end keyboard and mouse meets the first preset condition. As shown in FIG. 14(c)-1 and FIG. 14(c)-2, the cursor identifier of the source end keyboard and mouse is displayed on a screen of the device 3.

Step 607: When the real-time attribute information of the source end keyboard and mouse meets a second preset condition, the destination end device sends, to the source end device, second indication information indicating to trigger keyboard and mouse traversal.

The destination end keyboard and mouse is an input device that is connected to the destination end device, for example, a mouse or a keyboard, and that responds to a user operation based on a cursor display location, and may be configured to control the destination end device.

In some embodiments, the second preset condition may include: a cursor location in real-time attribute information of the destination end keyboard and mouse reaches a boundary of the screen of the destination end device, and an operation of continuing to move the destination end keyboard and mouse out of the boundary is received. For example, if the cursor location in the real-time attribute information of the destination end keyboard and mouse reaches a left boundary of the screen of the destination end device, and a movement operation of moving the destination end keyboard and mouse leftward is received, it is determined that the second preset condition is met. A case in which the second preset condition is met may be determined as the second preset condition for triggering keyboard and mouse traversal.

In some embodiments, a correspondence between a quantity of source end devices and a quantity of destination end devices is a many-to-many relationship. For example, one source end device projects a projection interface to a plurality of destination end devices, and a plurality of source end devices project respective projection interfaces to one destination end device. It should be noted that a case in which a plurality of source end devices perform projection to one destination end device is similar to the foregoing case in which one source end device performs projection to a plurality of destination end devices. Details are not described herein again.

Step 608: When receiving the second indication information, the source end device displays a cursor identifier of the destination end keyboard and mouse.

It should be noted that the source end device may set control permission of the destination end device in response to a user operation. For example, it is set that operations such as shutdown, software update, and system file deletion cannot be performed.

In some embodiments, the second preset condition may be that the cursor location in the real-time attribute information of the destination end keyboard and mouse reaches the boundary of the screen of the destination end device, and an operation of moving the destination end keyboard and mouse to the boundary is received. For example, if the cursor location in the real-time attribute information of the destination end keyboard and mouse reaches a right boundary of the screen of the destination end device, and a movement operation of moving the destination end keyboard and mouse rightward is received, it is determined that the second preset condition is met. When the second preset condition is met, it may be determined to trigger a keyboard and mouse traversal event.

In some embodiments, if the destination end keyboard and mouse meet the second preset condition, the destination end keyboard and mouse are displayed on the source end device. That the source end device completes service negotiation includes starting a keyboard and mouse injection service in a keyboard and mouse service, so that the cursor identifier of the destination end keyboard and mouse can be displayed on the source end device. In other words, the source end device may be controlled through the source end keyboard and mouse and the destination end keyboard and mouse, that is, the destination end device reversely controls the source end device. It may be understood that the cursor identifier of the destination end mouse includes the first schematic mouse identifier and the source end device identifier. The cursor identifier of the destination end mouse includes the second schematic mouse identifier and the source end device identifier.

In some embodiments, the destination end keyboard and mouse move from the destination end device to the source end device in response to a user operation, and coordinate conversion needs to be performed based on the screen size of the source end device and the screen size of the destination end device, to ensure that any location of the source end device can be indicated by the keyboard and mouse, and enable control of all display content of the destination end device through the destination end keyboard and mouse.

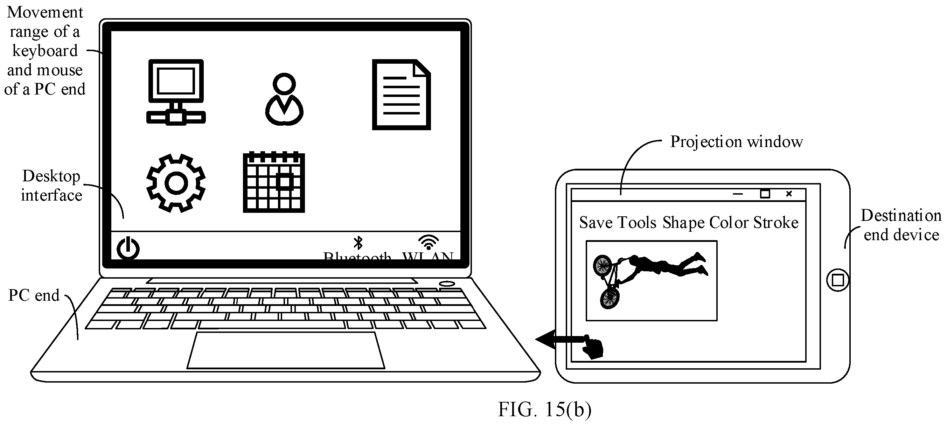

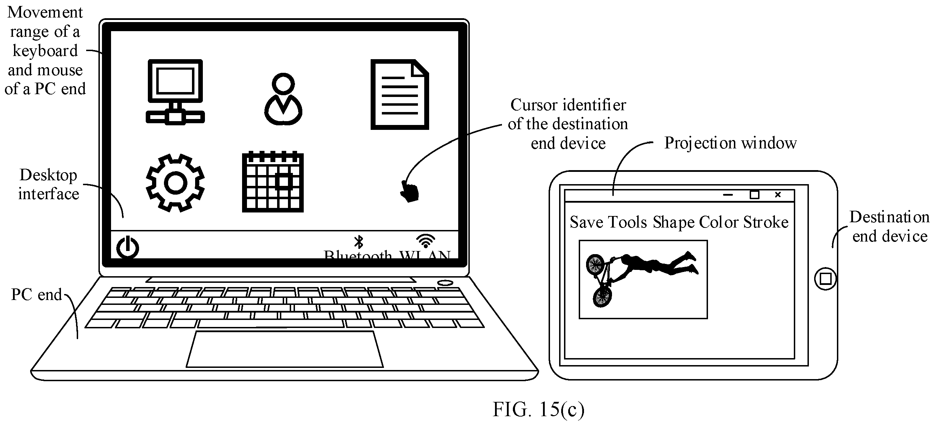

For example, as shown in FIG. 15(a), one source end device is connected to one destination end device. As shown in FIG. 15(b), when a keyboard and mouse cursor of the destination end device moves to a right screen side, the keyboard and mouse cursor continues to slide rightward. As shown in FIG. 15(c), the source end device displays the cursor identifier of the keyboard and mouse of the destination end.

It should be noted that the foregoing step 605 to step 608 describe how to implement keyboard and mouse sharing from a perspective of monitoring performed by the source end device or the destination end device on the mouse, and may further describe how to implement keyboard and mouse sharing from a perspective of keyboard and mouse information received by the source end device or the destination end device. Based on the foregoing steps 601 to 604, the projection method further includes the following steps.

For the source end device:
The source end device receives first keyboard and mouse attribute information from the destination end device, and displays a first keyboard and mouse cursor identifier corresponding to the first keyboard and mouse attribute information, where the first keyboard and mouse attribute information is information that meets a first preset condition. The source end device receives first keyboard and mouse operation information from the destination end device, performs a response operation in response to the first keyboard and mouse operation information, and updates and displays the first interface, where the first keyboard and mouse operation information is keyboard and mouse operation information corresponding to the first keyboard and mouse cursor identifier obtained by the destination end device. The source end device displays a second keyboard and mouse cursor identifier, and sends second keyboard and mouse attribute information corresponding to the second keyboard and mouse cursor identifier, where the second keyboard and mouse attribute information is information that meets a second preset condition. When an identifier location of the second keyboard and mouse cursor identifier belongs to the projection window, the source end device obtains second keyboard and mouse operation information corresponding to the second keyboard and mouse cursor identifier, and performs a response operation in response to the second keyboard and mouse operation information to update content in the projection window; or when an identifier location of the second keyboard and mouse cursor identifier does not belong to the projection window, the source end device sends second keyboard and mouse operation information corresponding to the second keyboard and mouse cursor identifier to the destination end device, so that the destination end device performs a response operation in response to the second keyboard and mouse operation information to update content outside the projection window on a currently displayed interface.

For the destination end device:
The destination end device receives second keyboard and mouse attribute information from the source end device, and displays a second keyboard and mouse cursor identifier corresponding to the second keyboard and mouse attribute information, where the second keyboard and mouse attribute information is information that meets a second preset condition. The destination end device updates and displays a currently displayed interface based on second keyboard and mouse operation information. The destination end device displays a first keyboard and mouse cursor identifier, and sends first keyboard and mouse attribute information corresponding to the first keyboard and mouse cursor identifier, where the first keyboard and mouse attribute information is information that meets a first preset condition. The destination end device obtains first keyboard and mouse operation information corresponding to the first keyboard and mouse cursor identifier, and sends the first keyboard and mouse operation information to the source end device, so that the source end device receives the first keyboard and mouse operation information and performs a response operation in response to the first keyboard and mouse operation information to update and display the first interface.

That the destination end device updates and displays a currently displayed interface based on second keyboard and mouse operation information includes: When an identifier location of the second keyboard and mouse cursor identifier belongs to the projection window, the destination end device sends the second keyboard and mouse operation information to the source end device, so that the source end device performs a response operation in response to the second keyboard and mouse operation information to update content in the projection window; or when an identifier location of the second keyboard and mouse cursor identifier does not belong to the projection window, the destination end device receives the second keyboard and mouse operation information from the source end device, and performs a response operation in response to the second keyboard and mouse operation information to update content outside the projection window in the currently displayed interface, where the second keyboard and mouse operation information is keyboard and mouse operation information corresponding to the second keyboard and mouse cursor identifier obtained from the source end device.

For the destination end device and the source end device, similarly, the first preset condition includes: a cursor location in the first keyboard and mouse attribute information belongs to a screen boundary of the destination end device, and a keyboard and mouse movement direction in the first keyboard and mouse attribute information is moving towards an outside of the screen boundary of the destination end device. The second preset condition includes: a cursor location in the second keyboard and mouse attribute information belongs to a screen boundary of the source end device, and a keyboard and mouse movement direction in the second keyboard and mouse attribute information is moving towards an outside of the screen boundary of the source end device.

In this way, when the projection interface is displayed in the projection window, other content (for example, a running application, a received notification message, or an application icon) can be further displayed on the screen of the PAD end, to reduce impact of the projection interface on the PAD end, so that the PAD end can flexibly control the projection interface in response to a user operation. The destination end device may reversely control the source end device, to implement bidirectional keyboard and mouse sharing from the source end device to the destination end device or from the destination end device to the source end device in a projection process. In addition, a projection channel and a keyboard and mouse channel do not interfere with each other. When the source end device and the destination end device share a screen, bidirectional keyboard and mouse sharing is implemented.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The foregoing integrated module may be implemented in a form of hardware. It should be noted that module division in this embodiment is an example and is merely logical function division. In actual implementation, there may be another division manner.

An embodiment of this application further provides an electronic device, as shown in FIG. 16. The electronic device may include one or more processors 1001, a memory 1002, and a communication interface 1003.

The memory 1002 and the communication interface 1003 are coupled to the processor 1001. For example, the memory 1002 and the communication interface 1003 may be coupled to the processor 1001 through a bus 1004.

The communication interface 1003 is configured to transmit data to another device. The memory 1002 stores computer program code. The computer program code includes computer instructions. When the computer instructions are executed by the processor 1001, the electronic device is enabled to perform the projection method in embodiments of this application.

The processor 1001 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to the present disclosure. The processor may be a combination of processors implementing a computing function, for example, a combination of one or more microprocessors, or a combination of the DSP and a microprocessor.

The bus 1004 may be a peripheral component interconnect (Peripheral Component Interconnect, PCI) bus, an extended industry standard architecture (Extended Industry Standard Architecture, EISA) bus, or the like. The bus 1004 may be categorized as an address bus, a data bus, a control bus, or the like. For ease of representation, only one bold line is used to represent the bus in FIG. 16, but this does not mean that there is only one bus or only one type of bus.

An embodiment of this application further provides a computer-readable storage medium. The computer storage medium stores computer program code. When the foregoing processor executes the computer program code, an electronic device performs related method steps in the foregoing method embodiments.

An embodiment of this application further provides a computer program product. When the computer program product runs on a computer, the computer is enabled to perform related method steps in the foregoing method embodiments.

The electronic device, the computer storage medium, or the computer program product provided in this application is configured to perform the corresponding method provided above. Therefore, for beneficial effects that can be achieved by the electronic device, the computer storage medium, or the computer program product, refer to the beneficial effects in the corresponding method provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the contributing part, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A projection method, applied to a source end device and comprising:
establishing, by the source end device, a projection connection to a destination end device, and starting a projection function and a first keyboard and mouse service;
displaying, by the source end device, a first interface;
sending, by the source end device, projection content to the destination end device, so that the destination end device displays the projection content in a projection window, wherein the projection content is content on a second interface, and the first interface is the same as or different from the second interface;
receiving, by the source end device, first keyboard and mouse attribute information from the destination end device, and displaying a first keyboard and mouse cursor identifier corresponding to the first keyboard and mouse attribute information, wherein the first keyboard and mouse attribute information is information that meets a first preset condition; and
receiving, by the source end device, first keyboard and mouse operation information from the destination end device, performing a response operation in response to the first keyboard and mouse operation information, and updating and displaying the first interface, wherein the first keyboard and mouse operation information is keyboard and mouse operation information corresponding to the first keyboard and mouse cursor identifier obtained by the destination end device.

2. The method according to claim 1, wherein the sending, by the source end device, projection content to the destination end device comprises:
performing screen capturing, by the source end device, on the second interface in response to a projection operation for the second interface, and performing image encoding on a projection interface obtained through capturing to obtain the projection content; and
sending, by the source end device, the projection content to the destination end device.

3. The method according to claim 1, wherein after the sending, by the source end device, projection content to the destination end device, the method further comprises:
displaying, by the source end device, a second keyboard and mouse cursor identifier, and sending second keyboard and mouse attribute information corresponding to the second keyboard and mouse cursor identifier, wherein the second keyboard and mouse attribute information is information that meets a second preset condition; and
when an identifier location of the second keyboard and mouse cursor identifier belongs to the projection window, obtaining, by the source end device, second keyboard and mouse operation information corresponding to the second keyboard and mouse cursor identifier, and performing a response operation in response to the second keyboard and mouse operation information to update content in the projection window; or
when an identifier location of the second keyboard and mouse cursor identifier does not belong to the projection window, sending, by the source end device, second keyboard and mouse operation information corresponding to the second keyboard and mouse cursor identifier to the destination end device, so that the destination end device performs a response operation in response to the second keyboard and mouse operation information to update content outside the projection window on a currently displayed interface.

4. The method according to claim 3, wherein the second preset condition comprises: a cursor location in the second keyboard and mouse attribute information belongs to a screen boundary of the source end device, and a keyboard and mouse movement direction in the second keyboard and mouse attribute information is moving towards an outside of the screen boundary of the source end device.

5. The method according to any one of claims 1 to 4, wherein the first preset condition comprises: a cursor location in the first keyboard and mouse attribute information belongs to a screen boundary of the destination end device, and a keyboard and mouse movement direction in the first keyboard and mouse attribute information is moving towards an outside of the screen boundary of the destination end device.

6. The method according to claim 1, wherein the projection connection comprises a device virtual channel; and the sending, by the source end device, projection content to the destination end device comprises:
sending, by the source end device, the projection content to the destination end device through the device virtual channel.

7. The method according to claim 6, wherein when there are a plurality of destination end devices, the establishing, by the source end device, a projection connection to a destination end device comprises:
separately establishing, by the source end device, a plurality of projection connections to the plurality of destination end devices, and allocating, based on each of the plurality of projection connections, a device virtual channel corresponding to each destination end device.

8. A projection method, applied to a destination end device and comprising:
starting, by the destination end device, a projection function and a second keyboard and mouse service when being connected to a projection connection;
receiving, by the destination end device, projection content from a source end device, and creating a projection window;
displaying, by the destination end device, the projection content in the projection window;
receiving, by the destination end device, second keyboard and mouse attribute information from the source end device, and displaying a second keyboard and mouse cursor identifier corresponding to the second keyboard and mouse attribute information, wherein the second keyboard and mouse attribute information is information that meets a second preset condition; and
updating and displaying, by the destination end device, a currently displayed interface based on second keyboard and mouse operation information.

9. The method according to claim 8, wherein the updating and displaying, by the destination end device, a currently displayed interface based on second keyboard and mouse operation information comprises:
when an identifier location of the second keyboard and mouse cursor identifier belongs to the projection window, sending, by the destination end device, the second keyboard and mouse operation information to the source end device, so that the source end device performs a response operation in response to the second keyboard and mouse operation information to update content in the projection window; or
when an identifier location of the second keyboard and mouse cursor identifier does not belong to the projection window, receiving, by the destination end device, the second keyboard and mouse operation information from the source end device, and performing a response operation in response to the second keyboard and mouse operation information to update content outside the projection window in the currently displayed interface, wherein the second keyboard and mouse operation information is keyboard and mouse operation information corresponding to the second keyboard and mouse cursor identifier obtained from the source end device.

10. The method according to claim 8, wherein after the receiving, by the destination end device, projection content from a source end device, the method further comprises:
decoding, by the destination end device, the projection content to obtain a projection interface; and
the displaying, by the destination end device, the projection content in the projection window comprises:
displaying, by the destination end device, the projection interface in the projection window based on a display area size of a second interface of the source end device and a display area size of the projection window.

11. The method according to claim 8, wherein after the displaying, by the destination end device, the projection content in the projection window, the method further comprises:
displaying, by the destination end device, a first keyboard and mouse cursor identifier, and sending first keyboard and mouse attribute information corresponding to the first keyboard and mouse cursor identifier, wherein the first keyboard and mouse attribute information is information that meets a first preset condition; and
obtaining, by the destination end device, first keyboard and mouse operation information corresponding to the first keyboard and mouse cursor identifier, and sending the first keyboard and mouse operation information to the source end device, so that the source end device receives the first keyboard and mouse operation information, and performs a response operation in response to the first keyboard and mouse operation information to update and display the currently displayed interface.

12. The method according to claim 11, wherein the first preset condition comprises: a cursor location in the first keyboard and mouse attribute information belongs to a screen boundary of the destination end device, and a keyboard and mouse movement direction in the first keyboard and mouse attribute information is moving towards an outside of the screen boundary of the destination end device.

13. The method according to any one of claims 8 to 12, wherein the second preset condition comprises: a cursor location in the second keyboard and mouse attribute information belongs to a screen boundary of the source end device, and a keyboard and mouse movement direction in the second keyboard and mouse attribute information is moving towards an outside of the screen boundary of the source end device.

14. The method according to claim 8, wherein the projection connection comprises a device virtual channel; and the receiving, by the destination end device, projection content from a source end device comprises:
receiving, by the destination end device, the projection content from the source end device through the device virtual channel.

15. The method according to any one of claims 9 to 13, wherein the projection window comprises a first display area used to display the projection interface and a second display area used to display a window editing control, and a size of the projection window is less than or equal to a size of a destination end screen.

16. An electronic device, comprising a memory and one or more processors, wherein the memory is coupled to the processor, the memory stores computer program code, the computer program code comprises computer instructions, and when the computer instructions are executed by the processor, the electronic device is enabled to perform the projection method according to any one of claims 1 to 7, or the electronic device is enabled to perform the projection method according to any one of claims 8 to 15.

17. A computer-readable storage medium, comprising computer instructions, wherein when the computer instructions are run on an electronic device, the electronic device is enabled to perform the projection method according to any one of claims 1 to 7, or the electronic device is enabled to perform the projection method according to any one of claims 8 to 15.

18. A computer program product, wherein when the computer program product runs on a computer, the computer is enabled to perform the projection method according to any one of claims 1 to 7, or the computer is enabled to perform the projection method according to any one of claims 8 to 15.
